# FASCICULE DE BREVET EUROPEEN

(11) **EP 1 599 352 B1**
(45) Date de publication et mention de la délivrance du brevet: **30.12.2009**
(21) Numéro de dépôt: 04711388.1
(22) Date de dépôt: 16.02.2004
(51) Int. Cl.: B60H 1/32, F25B 1/00, F25B 5/02, F25B 25/00

(54) **Appareil de ventilation, de chauffage et/ou de climatisation pour habitacle de vehicule automobile à refroidissement simultane d'air et d'un fluide caloporteur**
Ventilations-/Heiz- und/oder Klimatisierungsvorrichtung für den Fahrgastraum eines Kraftfahrzeugs mit gleichzeitiger Kühlung von Luft und Kühlmittel
Ventilation/heating and/or air conditioning device for the passenger compartment of a motor vehicle with simultaneous cooling of air and coolant

(30) Priorité: 20.02.2003 FR 0302072
(43) Date de publication de la demande: 30.11.2005
(73) Titulaire: VALEO SYSTEMES THERMIQUES, 78320 Le Mesnil St. Denis (FR)
(72) Inventeur: HALLER, Régine, F-78490 Boissy Sans Avoir (FR); LEPETIT, Loic, F-92800 Puteaux (FR)
(86) Numéro de dépôt international: PCT/FR2004/000352
(87) Numéro de publication internationale: WO 2004/078496

(56) Documents cités:
- EP-A- 0 488 553
- DE-A- 10 108 768
- FR-A- 2 686 655
- FR-A- 2 830 926
- GB-A- 2 278 432
- US-A- 3 070 975
- US-A- 3 830 077
- US-A- 4 383 421

## Description

L'invention se rapporte à un appareil de ventilation, de chauffage et/ou de climatisation pour habitacle de véhicule automobile à refroidissement simultané d'air et d'un fluide caloporteur.

Actuellement, les appareils de ventilation, de chauffage et/ou de climatisation pour habitacle de véhicule automobile comprennent de manière générale une boucle thermodynamique fermée fonctionnant selon le principe du cycle de Evans-Perkins. Cette boucle comprend au moins, selon le sens de circulation d'un fluide réfrigérant, un évaporateur sur l'air, un compresseur, un condenseur et une vanne de détente. Dans cette configuration, l'air est refroidi par passage sur l'évaporateur avant d'être expulsé vers l'habitacle par des canalisations. Une telle boucle thermodynamique est notamment connue du document US-A-3 830 077.

Or, à l'arrêt du véhicule, ces appareils sont peu performants, voire ne fonctionnent pas du tout. Cela est particulièrement gênant en cas de forte chaleur, notamment l'été lorsque le véhicule est garé au soleil, cette chaleur provoquant un « chambrage » de l'habitacle avec des températures de surface (planche de bord, porte, volant) pouvant atteindre 45°C, voire 60°C.

De plus, dans les véhicules récents qui sont équipés d'un système de gestion du moteur appelé « Stop and Go » (« arrêt et redémarrage »), c'est-à-dire arrêt du moteur à combustion interne lorsque le véhicule est au point mort, par exemple à un feu ou à un stop, puis redémarrage de celui-ci lorsque l'avance du véhicule est de nouveau souhaitée, grâce à un altermodémarreur, le moteur ne peut plus entraîner le compresseur lorsque celui-ci est mécanique. La climatisation est donc fréquemment interrompue, ce qui nuit au confort général des passagers.

La présente invention a ainsi pour objet de résoudre ces problèmes en valorisant et optimisant la boucle thermodynamique en refroidissant simultanément de l'air et un fluide caloporteur pour stockage des frigories quand le moteur à combustion interne fonctionne et par restitution desdites frigories quand le moteur est à l'arrêt.

Plus précisément, l'invention se rapporte à un appareil de ventilation, de chauffage et/ou de climatisation pour habitacle de véhicule automobile muni d'une boucle thermodynamique principale comprenant au moins, selon le sens de circulation en circuit fermée d'un fluide réfrigérant :
- un compresseur,
- un condenseur,
- un organe de détente, et
- un évaporateur principal sur l'air pour refroidir l'habitacle,
   ledit appareil comportant en outre une boucle fluide secondaire de circulation d'un fluide caloporteur couplé à la boucle thermodynamique principale afin de réfrigérer le fluide caloporteur.

Selon la présente invention, la bouclé fluide secondaire comprend, selon le sens de circulation du fluide caloporteur en circuit fermé :
- l'évaporateur auxiliaire, assurant le transport d'énergie entre la boucle thermodynamique principale et la boucle fluide secondaire, traversé par le fluide caloporteur et par le fluide réfrigérant de la boucle thermodynamique principale,
- une pompe électrique, et
- un dispositif de stockage de frigories destinées à être redistribuées, lorsque cela est souhaitable, par un échangeur froid.

Cette solution s'applique de manière particulièrement adaptée lorsque le moteur tourne au ralenti et quand le véhicule à l'arrêt

De manière préférentielle, la boucle fluide secondaire comprend en outre un échangeur froid sur l'air disposé entre la pompe électrique et le dispositif de stockage de frigories.

De préférence, une première électrovanne est montée en sortie de l'échangeur froid sur l'air et une seconde électrovanne est montée entre la pompe électrique et le dispositif de stockage de frigories, dans un circuit de dérivation, afin de privilégier soit l'accumulation de frigories dans le dispositif de stockage, soit la redistribution des frigories stockées par le passage du fluide caloporteur au travers de l'échangeur froid sur l'air.

Avantageusement, l'évaporateur auxiliaire est directement relié à l'évaporateur principal sur l'air par l'intermédiaire d'un caloduc.

De manière préférentielle, le dispositif de stockage de frigories contient un matériau à changement de phase qui est balayé par le fluide caloporteur afin de stocker puis libérer des frigories dans la boucle fluide secondaire.

De préférence, la boucle fluide secondaire comprend un équipement additionnel à refroidir, ledit équipement additionnel à refroidir étant interne à l'habitacle, tel qu'un siège ou une paroi de l'habitacle, et/ou externe à l'habitacle, tel qu'un moteur électrique, une batterie ou tout autre équipement électrique annexe.

Selon un autre mode de réalisation de l'invention, l'appareil comprenant en outre une canalisation de circulation d'air à l'intérieur de laquelle sont placés, selon le sens de circulation de l'air, l'échangeur froid, l'évaporateur principal et un radiateur de chauffage appartenant à une troisième boucle fluide de chauffage, l'évaporateur principal occupe toute la section de la conduite de sorte que l'air est forcé de le traverser pour être refroidi.

De préférence, des volets d'obturation et de distribution d'air sont placés devant l'échangeur froid et devant le radiateur de chauffage afin de faire varier la température de l'air expulsé en direction de l'habitacle.

Selon une variante de réalisation, l'évaporateur principal occupe une partie seulement de la section de la conduite et des volets d'obturation et de distribution d'air sont disposés devant l'échangeur froid, l'évaporateur principal et le radiateur de chauffage afin de faire varier la température de l'air expulsé en direction de l'habitacle.

De préférence, la troisième boucle fluide de chauffage est munie d'une vanne d'obturation permettant, en fonction de la température régnant dans l'habitacle et de la température à atteindre, d'utiliser l'inertie thermique du radiateur de chauffage lorsque le moteur thermique est à l'arrêt.

Encore de préférence, la troisième boucle fluide de chauffage est équipée d'un circuit de dérivation comprenant une pompe électrique et un réservoir de stockage d'eau glycolée pour interrompre la circulation de l'eau glycolée ou libérer des frigories au radiateur de chauffage lors de l'arrêt du moteur.

L'invention se rapporte également à un véhicule automobile équipé d'un appareil de ventilation, de chauffage et/ou de climatisation pour habitacle tel que défini précédemment.

D'autres caractéristiques, détails et avantages de l'invention ressortiront à la lecture de la description faite en référence aux dessins annexés donnés à titre d'exemple qui représentent respectivement :
- la figure 1, une vue schématique d'un premier mode de réalisation d'un appareil de ventilation, de chauffage et/ou de climatisation selon la présente Invention,
- la figure 2, une vue schématique d'un premier mode e fonctionnement de l'appareil de ventilation, de chauffage et/ou de climatisation de la figure 1,
- la figure 3, une vue schématique d'un second mode de fonctionnement de l'appareil de ventilation, de chauffage et/ou de climatisation de la figure 2,
- la figure 4, une vue schématique de détail d'une conduite de circulation d'air de l'appareil de ventilation, de chauffage et/ou de climatisation de la figure 1,
- la figure 5, une vue schématique de détail d'une variante due réalisation de la figure 4,
- la figure 6, une vue schématique d'un deuxième mode de réalisation d'un appareil de ventilation, de chauffage et/ou de climatisation selon la présente Invention,
- la figure 7, une vue schématique d'un troisième mode de réalisation d'un appareil de ventilation, de chauffage et/ou de climatisation selon la présente Invention,
- la figure 8, une vue schématique d'un quatrième mode de réalisation d'un appareil de ventilation, de chauffage et/ou de climatisation selon la présente Invention, et
- la figure 9, une autre vue schématique de l'appareil de ventilation, de chauffage et/ou de climatisation de la figure 9.

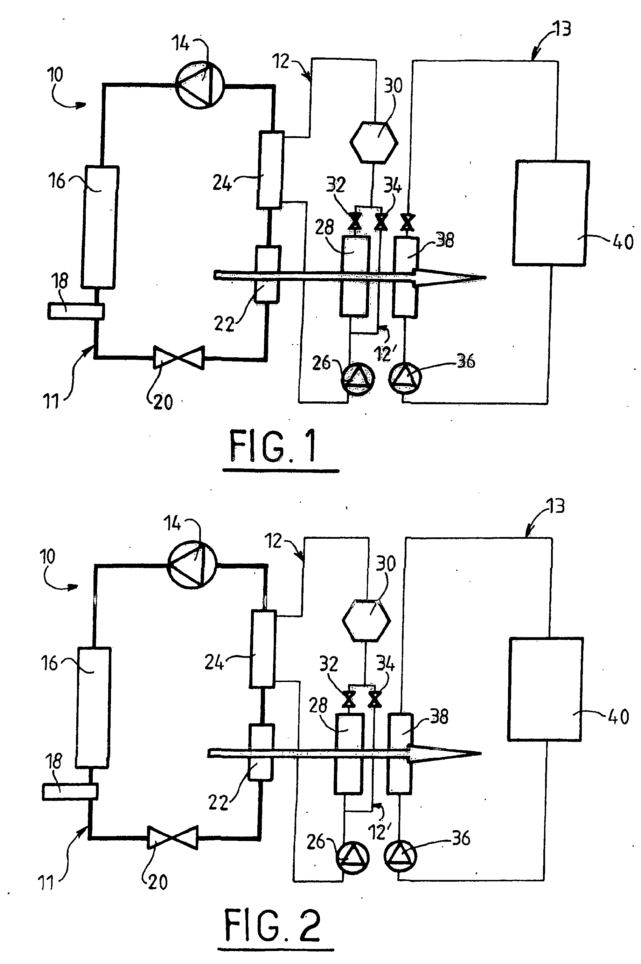

La figure 1 représente de manière schématisée un appareil 10 de ventilation, de chauffage et de climatisation pour habitacle de véhicule. Cet appareil 10 comprend une boucle thermodynamique principale 11, une boucle fluide secondaire 12 et une boucle fluide de chauffage 13 qui sont détaillés ci-après.

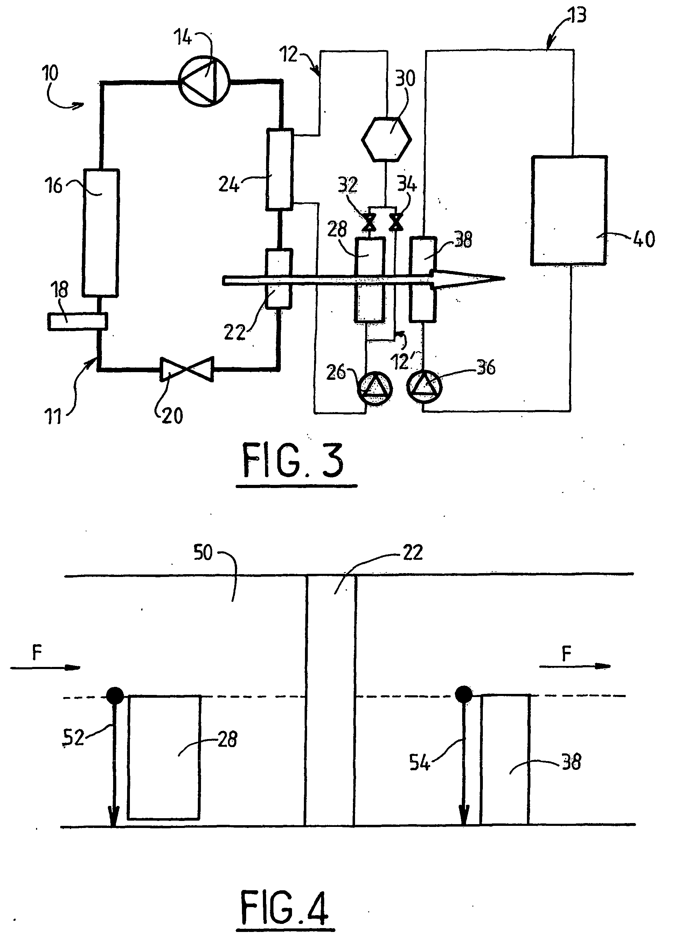

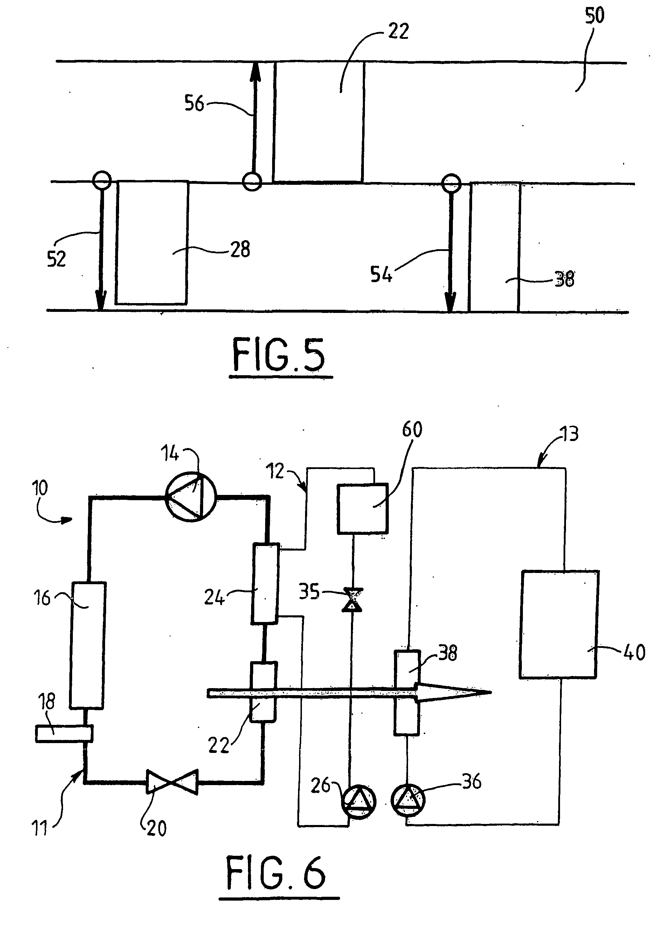

La boucle thermodynamique principale 11 comprend, selon le sens de circulation en circuit fermé d'un fluide réfrigérant tel que du R134A : un compresseur 14, un condenseur 16, une bouteille de stockage 18, une vanne de détente 20 telle qu'un détendeur électronique, un évaporateur sur l'air 22 et un évaporateur auxiliaire 24. L'évaporateur sur l'air 14, appelé également évaporateur principal dans la suite de la description, est placé dans une conduite de circulation d'air 50 (illustrée sur les figures 4 et 5) aboutissant vers différentes zones de l'habitacle à refroidir ou à réchauffer telles qu'une zone pour le désembuage du pare-brise, une zone d'aération et une zone de pieds.

L'évaporateur auxiliaire 24, du type à plaque, appartient également à la boucle fluide secondaire 12 qui comprenant en outre, selon le sens de circulation en circuit fermé d'un fluide caloporteur, tel que de l'eau glycolée, une pompe électrique 26, un échangeur thermique froid sur l'air 28 (appelé « radiateur froid ») et un dispositif 30 de stockage de frigories produites par ladite boucle fluide secondaire 12. Cet accumulateur 30 peut être constitué par un réservoir de fluide caloporteur qui stocke les frigories en chaleur sensible, ou bien contenir du matériau à changement de phase pour travailler en chaleur latente afin de diminuer la masse nécessaire et limiter les variations de température du stockage. Une première électrovanne 32 est disposée en sortie de l'échangeur thermique froid 28, et une deuxième électrovanne 34 est disposée entre la pompe électrique 26 et le dispositif 30 de stockage 30, sur un circuit de dérivation 12'.

La boucle fluide de chauffage 13 comprend, selon le sens de circulation en circuit fermée d'un fluide caloporteur tel que de l'eau glycolée, une pompe mécanique 36, un radiateur de chauffage 38 et un moteur thermique 40 (ou bien un radiateur intermédiaire de refroidissement de celui-ci). Le radiateur de chauffage 38 est également placé dans la même conduite de circulation d'air 50 que celle dans laquelle est placé l'évaporateur sur l'air 22. Cette partie de l'invention est décrite plus en détail en référence aux figures 4 et 5.

Selon un premier mode de fonctionnement de l'appareil de ventilation, de chauffage et de climatisation de l'invention 10, tel illustré sur la figure 2, appelé mode de stockage de frigories, la première électrovanne 32 est en position fermée et la deuxième électrovanne 34 est en position ouverte de sorte que le fluide caloporteur circule de la pompe électrique 26 vers le dispositif de stockage 30. L'air recyclé, ou provenant de l'extérieur de l'habitacle, traverse alors l'évaporateur principal 22 afin d'y être refroidit, puis traverse l'échangeur thermique froid 28 sans influence notable sur la température de l'air, et enfin traverse ou non le radiateur de chauffage 38, comme cela est illustré également dans les figures 4 et 5.

Selon un second mode de fonctionnement de l'appareil de ventilation, de chauffage et de climatisation de l'invention 10, tel qu'illustré sur la figure 3, appelé mode de redistribution des frigories sur le circuit d'air, la première électrovanne 32 est en position ouverte et la deuxième électrovanne 34 est en position fermée de sorte que le fluide réfrigérant stocké dans le dispositif de stockage 30 traverse l'évaporateur auxiliaire à plaque 24, puis est pompé par la pompe électrique 26 afin d'être envoyé vers l'échangeur thermique froid 28. L'air recyclé, ou provenant de l'extérieur de l'habitacle, traverse alors l'évaporateur principal 22, puis traverse l'échangeur thermique froid 28 afin d'y être refroidit, en enfin traverse ou non le radiateur de chauffage 38 comme cela est illustré également dans les figures 4 et 5.

Ainsi, en fonction de la position des électrovannes 32 et 34, il est possible de privilégier soit le stockage de frigories dans l'accumulateur 30, soit la redistribution des frigories stockées vers l'évaporateur auxiliaire 24 par passage du fluide caloporteur au travers de l'échangeur froid sur l'air 28.

Les figures 4 et 5 illustrent deux schémas aérauliques de distribution de l'air. Sur le schéma de la figure 4, l'évaporateur principal 22 sur l'air occupe toute la section de la conduite de circulation d'air 50, avec, selon le sens de circulation de l'air illustré par la flèche F, l'échangeur thermique froid 28 placé en amont de l'évaporateur principal 14, et le radiateur de chauffage 38 placé en aval dudit évaporateur 14, de sorte que l'air passe impérativement au travers de l'évaporateur principal 22. Des volets de distribution 52 et 54 permettent de réguler la température de l'air en faisant ou non passer l'air au travers de l'échangeur thermique froid 28 et/ou du radiateur de chauffage 38.

Sur le schéma de la figure 5, l'évaporateur principal 22 n'occupe qu'une partie de la section de la conduite de circulation 50, et un troisième volet d'obturation 56 est placé en amont dudit évaporateur principal 22 de manière à faire passer ou non l'air au travers de celui-ci. La disposition des deux autres volets 52 et 54, ainsi que du radiateur de chauffage 38 et de l'échangeur froid 28 reste identique à celle des éléments similaires de la figure 4.

### Application du système pour la climatisation d'une voiture à l'arrêt fonctionnant en « stop and go »:

Après la phase de montée en température (chambrage de l'habitacle du véhicule à une température élevée), la capacité excédentaire de refroidissement fournie par la boucle thermodynamique principale 11, par l'intermédiaire de l'évaporateur 24, est valorisée pour refroidir le fluide caloporteur qui traverse l'organe 30 de stockage de frigories.

Dans le cas des véhicules fonctionnant en « Stop and Go », le moteur à combustion interne 40 est arrêté dans les phases de Stop et ne peut plus entraîner le compresseur 36 lorsque que celui-ci est mécanique, comme dans les véhicules actuels. Pendant cette phase critique, la boucle secondaire 12 fonctionne en mode déstockage. Le fluide caloporteur est mis en circulation par la pompe électrique 26 et traverse l'échangeur froid 28 interposé dans le flux d'air. En fonction de la capacité de l'accumulateur de frigories 30, un surplus d'air froid peut ainsi être distribué pendant un temps limité, de l'ordre de quelques dizaines de secondes. Le temps et la qualité du refroidissement sont déterminés par :
- La masse et les caractéristiques thermiques de l'accumulateur 30 (capacité calorifique, enthalpie de changement de phase, constante de temps,...)
- Les caractéristiques de l'échangeur froid 28 (efficacité de l'échangeur). Celui-ci doit avoir une bonne performance afin d'obtenir de l'air suffisamment froid avec un fluide caloporteur à une température qui peut varier entre 0°C et 15°C.

### Optimisation de la performance énergétique :

Dans les phases de fort besoin de refroidissement de l'air, la pompe électrique 26 ne fonctionne pas et les électrovannes 32 et 34 sont fermées. Dans cet état, la boucle thermodynamique principale 11 fonctionne avec ses performances nominales. L'inertie thermique de l'évaporateur auxiliaire 24 a un faible impact dans la mesure où le fluide caloporteur ne circule pas dans la boucle fluide secondaire 12. Dans les premiers instants, l'effet de son inertie est compensé par une meilleure performance de l'évaporateur principal 22 dans le flux d'air car il opère en mode noyé, c'est-à-dire saturé en phase liquide.

Dans les phases pendant lesquelles la boucle thermodynamique principale 11 fournit un surplus de froid au circuit d'air, la pompe électrique 26 est alors activée et la deuxième électrovanne 34 du circuit de dérivation 12' de l'échangeur froid 28 est ouverte. La pompe 26 à débit variable permet ainsi de prélever le froid sur la boucle secondaire 12 de façon limitée afin de ne pas dégrader le fonctionnement normal de refroidissement de l'air. Ce mode de fonctionnement permet de réguler la température soufflée dans l'habitacle sans réchauffage de l'air sur le radiateur chaud 38 après son refroidissement sur l'évaporateur 22 par le phénomène appelé « reheat », ou bien ce « reheat » est limité aux cas de contrôle de l'humidité lié à un risque d'embuage du pare-brise ou ayant une incidence sur le confort. Ce fonctionnement évite l'aberration énergétique qui consiste à réchauffer l'air refroidi. Les frigories stockées peuvent être ensuite réinjectées dans le circuit d'air par l'intermédiaire de l'échangeur froid 28 pendant des phases d'arrêt du compresseur 14.

### La régulation :

Pour les applications de stockage (Stop & Go ou optimisation énergétique), différents paramètres de régulation sont envisagés. La régulation pourra agir sur :
- Le débit et la température du fluide caloporteur, le débit d'air du pulseur, la répartition du débit d'air à l'aide des volets, avec une variante possible permettant de se passer complètement ou partiellement de l'évaporateur principal 22.
- La cylindrée du compresseur 14 ou sa mise en route. La demande en froid dans l'habitacle est dans ce cas prioritaire. Lorsque la capacité de réfrigération de la boucle principale 11 est surabondante par rapport à ce besoin, le mode stockage est déclenché.
- La puissance prélevée sur l'évaporateur auxiliaire 24 est ajustée au besoin, par l'adaptation du débit d'air au juste nécessaire ou par le, by-pass partiel de l'évaporateur auxiliaire 24, lorsque cela est prévu. En effet, pour stocker des frigories de façon efficace, il convient de maintenir la basse pression à un niveau suffisamment faible. Ceci conduirait, à une puissance sur l'air soufflé trop importante et à une nécessité de « reheat » gaspilleur d'énergie.

Une autre voie de régulation dans cette configuration pourrait être une utilisation partielle de l'évaporateur auxiliaire 24, par exemple par masquage d'une zone de celui-ci.

Dans le cas d'une recherche d'optimum énergétique, il est impératif de pouvoir réguler le débit d'air traversant l'évaporateur principal à air 22. De préférence, cette modulation du débit sur l'évaporateur principal 22 est faite en conservant le débit d'air global, mais en by-passant partiellement ledit évaporateur afin d'éviter les variations de vitesses d'air ressenties par les passagers.

La figure 6 illustre un deuxième mode de réalisation de l'invention. Selon ce deuxième mode de réalisation, la boucle fluide secondaire 12 comprend l'évaporateur auxiliaire à plaque 24, la pompe électrique 26, une électrovanne 35 et un équipement 60 à refroidir, soit extérieur à l'habitacle, tel qu'un moteur électrique, une batterie, une chaîne de traction ou un équipement électrique annexe tel que l'électronique de commande, soit intérieur à l'habitacle, tel qu'un siège ou une paroi (planche de bord, plafond, portes...). Le but est d'assurer un meilleur confort aux passagers ou d'assurer le conditionnement thermique d'équipements sensibles à la température en utilisant le fluide caloporteur refroidi (moteur électrique, batteries). Les circuits du fluide caloporteur peuvent facilement être adaptés en fonction du besoin. Dans ce cas d'utilisation, la mise en place d'un accumulateur thermique n'est pas indispensable. Cependant, un stockage intermédiaire peut être favorable pour optimiser le système énergétique. La priorité de refroidissement entre l'air de l'habitacle et les équipements est gérée par la régulation en fonction des plus fortes contraintes.

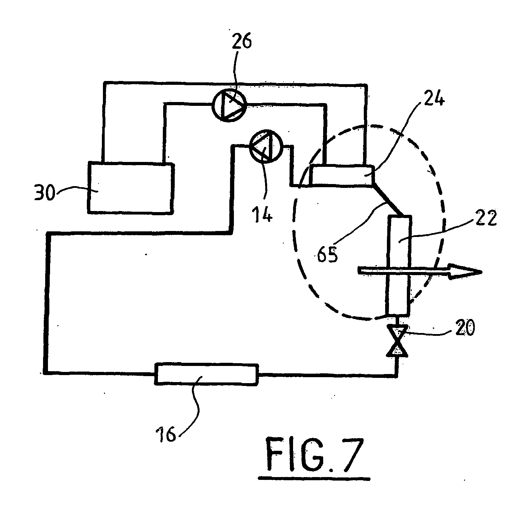

La figure 7 illustre un troisième mode de réalisation de l'invention. L'objectif est encore d'assurer le confort des passagers pendant les phases d'arrêt du moteur. Il s'agit de stocker des frigories quand le moteur à combustion interne fonctionne et de les restituer dans l'habitacle quand le moteur est à l'arrêt. La production de froid est assurée par la boucle thermodynamique principale 11. Une production simultanée d'air froid et de fluide caloporteur froid, tel que de l'eau glycolée froide, permet de stocker dans un échangeur spécifique des frigories. La distribution de l'énergie stockée est ainsi réalisée à l'aide d'un caloduc 65 interposé directement entre l'évaporateur principal et l'évaporateur auxiliaire à plaque. L'intérêt de ce mode de distribution est de limiter les modifications à apporter à l'appareil de ventilation, de chauffage et de climatisation 10 pour assurer cette nouvelle fonction. La puissance est alors transférée entre les deux évaporateurs par effet caloduc. Ce fonctionnement suppose que l'eau glycolée est mise en circulation par une pompe électrique pour assurer le transfert des frigories entre la zone de stockage et l'évaporateur à plaque.

Deux modes de fonctionnement principaux sont identifiés:
- Pendant les phases de fonctionnement du moteur à combustion interne 40 entraînant le compresseur, la boucle thermodynamique principale 11 produit du froid. La pompe 26 de la boucle fluide secondaire 12 fonctionne pendant les modes stockage.
- Pendant les phases d'arrêt du moteur à combustion interne 40, le maintien du confort peut être assuré pendant environ 30s en distribuant les frigories stockées. Le temps de maintien du confort est directement lié au dimensionnement du stockage. Pour 30s, il faut prévoir 250 g de glace, 500 g de matériau à changement de phase du type Rubitherm ou bien de l'ordre de 2 kg d'eau glycolée. Dans cette phase de fonctionnement, la zone du circuit réfrigérant contenant les deux évaporateurs 22 et 24 est isolée du reste du circuit par le compresseur d'une part et le détendeur d'autre part. Ces composants seront choisis en fonction de cette contrainte.

L'effet caloduc assure le transfert direct du liquide entre l'évaporateur auxiliaire à plaque 24, dans lequel aura lieu la condensation, et l'évaporateur principal 22. Le bon fonctionnement de ce système exige que l'évaporateur auxiliaire à plaque 24 soit positionné à une altitude plus élevée que celle de l'évaporateur principal 22. La circulation de la phase liquide dans le caloduc 65 peut se faire par gravité, sous réserve d'une différence d'altitude suffisante entre les deux échangeurs. Le retour de la phase gazeuse est imposé par la différence de pression crée entre la zone de condensation et la zone d'évaporation. Une autre solution est d'assurer le transfert liquide par capillarité si les parois du circuit sont conçues pour assurer cette fonction.

Le maintien du confort pendant les phases d'arrêt du moteur à combustion interne basé sur l'inertie thermique nécessite une certaine masse de stockage. La masse requise est évaluée en se basant sur les temps d'arrêt rencontrés sur les cycles normatifs (européens, américain et japonais). Une durée de 30 secondes couvre la majorité des situations. La puissance maximum nécessaire pour maintenir le confort avec une température de 45°C, une humidité relative de 40%, et un flux solaire 1000W/m² est évalué à 2500W en position recyclage d'air dans un véhicule de milieu de gamme. Pour maintenir la puissance de 2500W pendant 30s, l'inertie thermique nécessaire est de 75000 J. Cette inertie correspond à 227 g de glace, 500 g,de matériau à changement de phase (enthalpie de fusion de 150 kJ/kg), ou 2.2 kg d'eau glycolée dont la température varie de 10°C.

Un radiateur standard de chauffage pèse environ 1 kg et contient de l'ordre de 0.3kg d'eau glycolée. Son inertie thermique est donc de 1000J/kg/°C. Cette valeur permet de maintenir un confort thermique pendant seulement quelques secondes. En fonction du temps de maintien du confort recherché, il faut donc adapter cette inertie. L'intérêt d'utiliser, malgré tout, le radiateur comme terme d'inertie est lié au fait que deux fonctions peuvent être assurées dans une zone d'encombrement unique et faible. La masse du radiateur est ainsi modifiée pour augmenter l'inertie, mais l'encombrement sera peu affecté. Une masse complémentaire de 1.5 kg est intégrable dans l'équivalent d'une plaque de 0,2m x 0,3m x 0,025m.

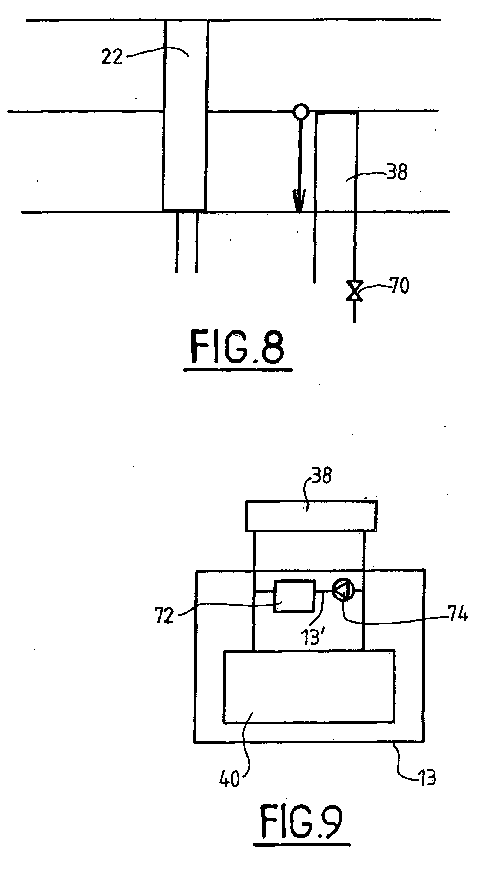

Les schémas des figures 8 et 9 représentent les flux des différents fluides dans l'appareil de ventilation, de chauffage et de climatisation 10. Pour valoriser la zone du radiateur de chauffage 38 afin de stocker des frigories permettant d'assurer le confort des passagers durant les phases d'arrêt du moteur à combustion interne pendant une durée de l'ordre de 30 s, les adaptations à envisager sont :
- Prévoir une vanne commandée 70 sur le circuit d'eau glycolée alimentant le radiateur de chauffage 38,
- Modifier la contenance du radiateur en terme d'eau glycolée pour augmenter son inertie thermique sans augmentation notable de son encombrement général, comme décrit précédemment,
- Gérer la position du volet placé devant le radiateur pour que l'air balaie ou non le radiateur. En saison intermédiaire (Température < 20°C), le radiateur de chauffage 38 n'est pas valorisée pour le stockage de frigories. La climatisation fonctionnera normalement pour assurer la fonction désembuage. En saison chaude (Température > 20°C et fort ensoleillement), la vanne 70 située sur le circuit d'eau glycolée est fermée. Le volet est alors ouvert pour permettre le balayage de la zone radiateur par l'air.

L'avantage de cette solution est de pouvoir augmenter l'inertie thermique sans modifier les composants intégrés dans l'appareil de ventilation, de chauffage et de climatisation.

Sur la figure 9, un réservoir complémentaire de stockage 72 et une pompe électrique 74 sont prévus sur un circuit de dérivation 13' de la boucle 13 de refroidissement du moteur. La commande du débit d'eau glycolée dans cette boucle est faite en fonction des températures et du fonctionnement du moteur à combustion interne. Le réservoir de stockage 72 peut contenir un matériau à changement de phase pour augmenter le ratio inertie thermique/masse, et permettre une stabilité de la température de stockage.

Il doit être bien entendu toutefois que ces exemples sont donnés uniquement à titre d'illustration de l'objet de l'Invention dont ils ne constituent en aucune manière une limitation.

Ainsi, la bouteille et le détendeur électronique des figures 1 à 3 peuvent être remplacés soit par une bouteille et un orifice calibré, soit par un accumulateur en amont du compresseur 14 et une vanne thermostatique.

## Revendications

1. Appareil de ventilation, de chauffage et/ou de climatisation pour habitacle de véhicule automobile muni :
- d'une boucle thermodynamique principale (11) comprenant au moins, selon le sens de circulation en circuit fermée d'un fluide réfrigérant, un compresseur (14), un condenseur (16), un organe de détente (20), un évaporateur principal sur l'air (22) pour refroidir l'habitacle,
- une boucle fluide secondaire (12) de circulation d'un fluide caloporteur couplé à la boucle thermodynamique principale (11) afin de réfrigérer le fluide caloporteur comprenant, selon le sens de circulation du fluide caloporteur en circuit fermé, un évaporateur auxiliaire (24), assurant le transport d'énergie entre la boucle thermodynamique principale (11) et la boucle fluide secondaire (12), traversé par le fluide caloporteur et par le fluide réfrigérant de la boucle thermodynamique principale (11) et une pompe électrique (26),
**caractérisé en ce que** la boucle fluide secondaire (12) comprend un dispositif (30) de stockage de frigories destinées à être redistribuées, lorsque cela est souhaitable, par un échangeur froid (28).

2. Appareil selon la revendication 1, dans lequel l'échangeur froid sur l'air (28) est disposé entre la pompe électrique (26) et le dispositif (30) de stockage de frigories.

3. Appareil selon la revendication 1 ou 2, dans lequel une première électrovanne (32) est montée en sortie de l'échangeur froid sur l'air (28) et une seconde électrovanne (34) est montée entre la pompe électrique (26) et le dispositif (30) de stockage de frigories, dans un circuit de dérivation (12'), afin de privilégier soit l'accumulation de frigories dans le dispositif de stockage (30), soit la redistribution des frigories stockées par le passage du fluide caloporteur au travers de l'échangeur froid sur l'air (28).

4. Appareil selon l'une quelconque des revendications 1 à 3, dans lequel l'évaporateur auxiliaire (24) est relié directement à l'évaporateur principal sur l'air (22) par l'intermédiaire d'un caloduc (65).

5. Appareil selon l'une quelconque des revendications 1 à 4, dans lequel le dispositif (30) de stockage de frigories contient un matériau à changement de phase qui est balayé par le fluide caloporteur afin de stocker puis libérer des frigories dans la boucle fluide secondaire (12).

6. Appareil selon l'une quelconque des revendications précédentes, dans lequel la boucle fluide secondaire (12) comprend en outre un équipement additionnel (60) à refroidir.

7. Appareil selon la revendication 6, dans lequel l'équipement additionnel à refroidir (60) est interne à l'habitacle, tel qu'un siège ou une paroi de l'habitacle, et/ou externe à l'habitacle, tel qu'un moteur électrique, une batterie ou tout équipement électrique annexe.

8. Appareil selon l'une quelconque des revendications précédentes, comprenant en outre une canalisation (50) de circulation d'air à l'intérieur de laquelle sont placés, selon le sens de circulation de l'air (F), l'échangeur froid (28), l'évaporateur principal (22) et un radiateur de chauffage (38) appartenant à une troisième boucle fluide chaude (13), **caractérisé en ce que** l'évaporateur principal (22) occupe toute la section de la conduite (50) de sorte que l'air est forcé de le traverser pour être refroidi.

9. Appareil selon la revendication 8, dans lequel des volets (52, 54) d'obturation et de distribution d'air sont placés devant l'échangeur froid (28) et devant le radiateur de chauffage (38) afin de faire varier la température de l'air expulsé en direction de l'habitacle.

10. Appareil selon l'une quelconque des revendications précédentes, comprenant en outre une canalisation de circulation d'air (50) à l'intérieur de laquelle sont placés, selon le sens de circulation de l'air (F), l'échangeur froid (28), l'évaporateur principal (22) et un radiateur de chauffage (38) appartenant à une troisième boucle fluide de chauffage (13), **caractérisé en ce que** l'évaporateur principal (22) occupe une partie seulement de la section de la conduite (50) et des volets (52, 54, 56) d'obturation et de distribution d'air sont disposés respectivement devant l'échangeur froid (28), devant l'évaporateur principal (22) et devant le radiateur de chauffage (38) afin de faire varier la température de l'air expulsé en direction de l'habitacle.

11. Appareil selon l'une quelconque des revendications 8 à 10, dans lequel la troisième boucle fluide de chauffage (13) est muni d'une vanne d'obturation (70) permettant, en fonction de la température régnant dans l'habitacle et de la température à atteindre, d'utiliser l'inertie thermique du radiateur de chauffage (38) lorsque le moteur thermique est à l'arrêt.

12. Appareil selon ta revendication 11, dans lequel la troisième boucle fluide de chauffage (13) est équipée d'un circuit de dérivation (13') comprenant une pompe électrique (74) et un réservoir de stockage (72) d'eau glycolée pour interrompre la circulation de l'eau glycolée ou libérer des frigories au radiateur de chauffage (38) lors de l'arrêt du moteur.

13. Véhicule automobile équipé d'un appareil de ventilation, de chauffage et/ou de climatisation pour habitacle selon l'une quelconque des revendications précédentes.

## Claims

1. Ventilation, heating and/or air conditioning equipment for the passenger compartment of a motor vehicle provided with:
- a main thermodynamic loop (11) comprising at least, in the direction of flow of a refrigerant fluid in closed circuit, a compressor (14), a condenser (16), an expansion device (20) and a main air-cooling evaporator (22) for cooling the passenger compartment,
- a secondary fluid loop (12) for the flow of a heat conductor fluid coupled with the main thermodynamic loop (11) in order to cool the heat conductor fluid comprising, in the direction of flow of the heat conductor fluid in closed circuit, an auxiliary evaporator (24) which ensures the transfer of energy between the main thermodynamic loop (11) and the secondary fluid loop (12), traversed by the heat conductor fluid and by the refrigerant fluid of the main thermodynamic loop (11), and an electric pump (26),
**characterized in that** the secondary fluid loop (12) comprises a low-temperature high-heat-capacity device (30) intended to provide cooling when this is desirable, through a cold exchanger (28).

2. Equipment according to Claim 1, in which the air-cooling cold exchanger (28) is disposed between the electric pump (26) and the low-temperature high-heat-capacity device (30).

3. Equipment according to Claim 1 or 2, in which a first solenoid valve (32) is fitted at the output of the air-cooling cold exchanger (28) and a second solenoid valve (34) is fitted between the electric pump (26) and the low-temperature high-heat-capacity device (30), in a branch circuit (12'), in order to favour either the removal of heat from the high-heat-capacity device (30), or the absorption of heat into it by the passage of the heat conductor fluid through the air-cooling cold exchanger (28).

4. Equipment according to any one of Claims 1 to 3, in which the auxiliary evaporator (24) is directly connected to the main air-cooling evaporator (22) by the intermediary of a heat pipe (65).

5. Equipment according to any one of Claims 1 to 4, in which the low-temperature high-heat-capacity device (30) contains a phase changing material which is swept by the heat conductor fluid in order to release heat and then remove it from the secondary fluid loop (12).

6. Equipment according to any one of the preceding claims, in which the secondary fluid loop (12) furthermore comprises an additional equipment (60) to be cooled.

7. Equipment according to Claim 6, in which the additional equipment to be cooled (60) is inside the passenger compartment, such as a seat or a surface of the passenger compartment, and/or outside of the passenger compartment, such as an electric motor, a battery or any other appended electrical equipment.

8. Equipment according to any one of the preceding claims, furthermore comprising an air circulation ducting (50) inside of which are placed, in the direction of flow of the air (F), the cold exchanger (28), the main evaporator (22) and a heating radiator (38) belonging to a third hot fluid loop (13), **characterized in that** the main evaporator (22) occupies the whole cross-section of the duct (50) such that the air is forced to pass through it in order to be cooled.

9. Equipment according to Claim 8, in which air obturating and distribution flaps (52, 54) are placed in front of the cold exchanger (28) and in front of the heating radiator (38) in order to vary the temperature of the air expelled into the passenger compartment.

10. Equipment according to any one of the preceding claims, furthermore comprising an air circulation ducting (50) inside of which are placed, in the direction of flow of the air (F), the cold exchanger (28), the main evaporator (22) and a heating radiator (38) belonging to a third heating fluid loop (13), **characterized in that** the main evaporator (22) occupies only a part of the cross-section of the duct (50) and air obturating and distribution flaps (52, 54, 56) are placed in front of the cold exchanger (28), in front of the main evaporator (22) and in front of the heating radiator (38) respectively in order to vary the temperature of the air expelled into the passenger compartment.

11. Equipment according to any one of Claims 8 to 10, in which the third heating fluid loop (13) is provided with an obturating valve (70) making it possible, as a function of the temperature existing inside the passenger compartment and of the temperature to be reached, to use the thermal inertia of the heating radiator (38) when the heat engine is stopped.

12. Equipment according to Claim 11, in which the third heating fluid loop (13) is equipped with a branch circuit (13') comprising an electric pump (74) and a reservoir (72) for storing glycol water for interrupting the flow of the glycol water or absorbing heat from the heating radiator (38) when the engine is stopped.

13. Motor vehicle equipped with a passenger compartment ventilation, heating and/or air conditioning equipment according to any one of the preceding claims.

## Patentansprüche

1. Ventilations-, Heiz- und/oder Klimatisierungsgerät für einen Kraftfahrzeuginnenraum, ausgestattet mit:
- einer thermodynamischen Hauptschleife (11), die mindestens, in Strömungsrichtung eines Kühlfluids im geschlossenen Kreislauf, einen Kompressor (14), einen Kondensator (16), ein Expansionsorgan (20), einen Luft-Hauptverdampfer (22) aufweist, um den Innenraum zu kühlen,
- eine Sekundärfluidschleife (12) für den Kreislauf eines Wärmeträgerfluids, die mit der thermodynamischen Hauptschleife (11) gekoppelt ist, um das Wärmeträgerfluid zu kühlen, die, in Strömungsrichtung des Wärmeträgerfluids im geschlossenen Kreislauf, einen Hilfsverdampfer (24), der den Energietransport zwischen der thermodynamischen Hauptschleife (11) und der Sekundärfluidschleife (12) gewährleistet, vom Wärmeträgerfluid und vom Kühlfluid der thermodynamischen Hauptschleife (11) durchflossen wird, und eine Elektropumpe (26) enthält,
**dadurch gekennzeichnet, dass** die Sekundärfluidschleife (12) eine Vorrichtung (30) zum Speichern von Frigorien enthält, die dazu bestimmt sind, wenn dies wünschenswert ist, von einem Kältetauscher (28) neu verteilt zu werden.

2. Gerät nach Anspruch 1, bei dem der Luft-Kältetauscher (28) zwischen der Elektropumpe (26) und der Vorrichtung (30) zum Speichern von Frigorien angeordnet ist.

3. Gerät nach Anspruch 1 oder 2, bei dem ein erstes Elektroventil (32) am Ausgang des Luft-Kältetauschers (28) und ein zweites Elektroventil (34) zwischen der Elektropumpe (26) und der Vorrichtung (30) zum Speichern von Frigorien in einem Abzweigkreislauf (12') montiert ist, um entweder das Speichern von Frigorien in der Speichervorrichtung (30) oder die Neuverteilung der gespeicherten Frigorien durch den Durchgang des Wärmeträgerfluids durch den Luft-Kältetauscher (28) zu begünstigen.

4. Gerät nach einem der Ansprüche 1 bis 3, bei dem der Hilfsverdampfer (24) mittels eines Wärmeleitrohrs (65) direkt mit dem Luft-Hauptverdampfer (22) verbunden ist.

5. Gerät nach einem der Ansprüche 1 bis 4, bei dem die Vorrichtung (30) zum Speichern von Frigorien ein Phasenumwandlungsmaterial enthält, das von dem Wärmeträgerfluid überstrichen wird, um Frigorien zu speichern und dann in die Sekundärfluidschleife (12) freizusetzen.

6. Gerät nach einem der vorhergehenden Ansprüche, bei dem die Sekundärfluidschleife (12) außerdem eine zusätzliche zu kühlende Einrichtung (60) enthält.

7. Gerät nach Anspruch 6, bei dem die zusätzliche zu kühlende Einrichtung (60) sich innerhalb des Innenraums, z.B. ein Sitz oder eine Wand des Innenraums, und/oder außerhalb des Innenraums befindet, z.B. ein Elektromotor, eine Batterie oder eine beliebige elektrische Nebeneinrichtung.

8. Gerät nach einem der vorhergehenden Ansprüche, das außerdem eine Rohrleitung (50) für die Luftzirkulation enthält, in deren Innerem, in Strömungsrichtung der Luft (F), der Kältetauscher (28), der Hauptverdampfer (22) und ein Heizkörper (38) angeordnet sind, der zu einer dritten warmen Fluidschleife (13) gehört, **dadurch gekennzeichnet, dass** der Hauptverdampfer (22) den ganzen Querschnitt der Leitung (50) einnimmt, so dass die Luft gezwungen wird, ihn zu durchqueren, um gekühlt zu werden.

9. Gerät nach Anspruch 8, bei dem Klappen (52, 54) zum Verschließen und zur Luftverteilung vor dem Kältetauscher (28) und vor dem Heizkörper (38) angeordnet sind, um die Temperatur der in Richtung des Innenraums ausgestoßenen Luft zu verändern.

10. Gerät nach einem der vorhergehenden Ansprüche, das weiter eine Luftzirkulationsrohrleitung (50) enthält, in deren Innerem, in Strömungsrichtung der Luft (F), der Kältetauscher (28), der Hauptverdampfer (22) und ein Heizkörper (38) angeordnet sind, der zu einer dritten Heizfluidschleife (13) gehört, **dadurch gekennzeichnet, dass** der Hauptverdampfer (22) nur einen Teil des Querschnitts der Leitung (50) einnimmt, und Klappen (52, 54, 56) zum Verschließen und zur Luftverteilung vor dem Kältetauscher (28), vor dem Hauptverdampfer (22), bzw. vor dem Heizkörper (38) angeordnet sind, um die Temperatur der in Richtung des Innenraums ausgestoßenen Luft zu verändern.

11. Gerät nach einem der Ansprüche 8 bis 10, bei dem die dritte Heizfluidschleife (13) mit einem Verschlussventil (70) versehen ist, das es in Abhängigkeit von der im Innenraum herrschenden Temperatur und von der zu erreichenden Temperatur ermöglicht, die thermische Trägheit des Heizkörpers (38) zu nutzen, wenn der Wärmemotor abgeschaltet ist.

12. Gerät nach Anspruch 11, bei dem die dritte Heizfluidschleife (13) mit einem Abzweigkreislauf (13') versehen ist, der eine Elektropumpe (74) und einen Speichertank (72) für glykolhaltiges Wasser aufweist, um die Zirkulation des glykolhaltigen Wassers zu unterbrechen oder Frigorien an den Heizkörper (38) beim Abschalten des Motors freizusetzen.

13. Kraftfahrzeug, das mit einem Ventilations-, Heiz- und/oder Klimatisierungsgerät für einen Innenraum nach einem der vorhergehenden Ansprüche ausgestattet ist.
